# EUROPÄISCHE PATENTANMELDUNG

(11) **EP 4 847 158 A1**
(43) Veröffentlichungstag der Anmeldung: **02.12.2026**
(21) Anmeldenummer: 25179610.8
(22) Anmeldetag: 28.05.2025
(51) Int. Cl.: B21D 28/16, B21D 53/16, B21D 53/84, F01D 17/16, B21D 19/08

(54) **FEINSCHNEIDWERKZEUG UND VERFAHREN ZUM HERSTELLEN EINES VERSTELLRINGS SOWIE VERSTELLRING**

(71) Anmelder: Heinz Hänggi Swiss Stamping Solutions GmbH, 2544 Bettlach (CH)
(72) Erfinder: HUTZLI, Florian, 3012 Bern (CH); KREFT, Pascal, 58840 Plettenberg (DE)
(74) Vertreter: Paustian & Partner Patentanwälte mbB

(57) **Zusammenfassung**

Die Erfindung betrifft ein Feinschneidwerkzeug (18) und ein Verfahren zum Herstellen eines Verstellrings (1), insbesondere für eine Leitschaufelverstelleinheit einer Turbine. Innenformkavitäten (10) eines Feinschneidstempels (2) des Feinschneidwerkzeugs (18) sind zum Bilden von Verstellhebelkulissen (3) des Verstellrings (1) ausgebildet. Entlang einer Innenformkavitätskante (10) der jeweiligen Innenformkavität (9) ist eine Verstärkungselementkavität (11) zum Bilden eines Verstärkungselements (3) des Verstellrings (1) gebildet, welche in eine Innenformkavitätswand (15) der Innenformkavität (9) sowie in eine Axialstempelfläche (14) des Feinschneidstempels (2) eintaucht. Die Erfindung betrifft zudem einen Verstellring, der mittels des Feinschneidwerkzeugs (18) bzw. mittels des Verfahrens hergestellt ist.

## Beschreibung

Die Erfindung betrifft ein Feinschneidwerkzeug zum Herstellen eines Verstellrings, insbesondere für eine Leitschaufelverstelleinheit einer Turbine. Zudem betrifft die Erfindung ein Verfahren zum Herstellen eines Verstellrings mittels des Feinschneidwerkzeugs. Überdies betrifft die Erfindung einen Verstellring, der mittels des Verfahrens bzw. mittels des Feinschneidwerkzeugs hergestellt ist.

Ein solcher Verstellring kann in einer Leitschaufelverstelleinheit einer Turbine eingesetzt werden, bei welcher es sich beispielsweise um ein Bauteil eines Abgasturboladers mit einer variablen Turbinengeometrie handelt, insbesondere für eine Verbrennungskraftmaschine, zum Beispiel für ein Kraftfahrzeug. Ein solcher Turbolader sowie dessen Verstellring sind aus dem Stand der Technik bekannt, etwa aus der DE 102 38 412 A1. An einem Leitschaufelträger sind Leitschaufeln der Turbine schwenkbar angeordnet, die jeweils mit einem jeweiligen Verstellhebel drehfest verbunden sind. Die Verstellhebel ragen jeweils in eine jeweilige Aussparung des Verstellrings hinein. So ist eine Winkelstellung der Leitschaufeln relativ zum Leitschaufelträger durch Drehen des Verstellrings kollektiv für alle Leitschaufeln verstellbar.

Bei herkömmlichen Verstellringen kann es jedoch dazu kommen, dass die Aussparungen (die auch als Führungsnuten bezeichnet werden können), in welche die Verstellhebel hineinragen, sowie die Abschnitte (die auch als Pins bezeichnet werden können) der Verstellhebel, mit denen sie in die Aussparungen hineinragen, besonders hohem Verschleiß unterworfen sind. Eine eventuell vorhandene Schutzschicht, beispielsweise eine Nitrierschicht, wird aufgrund unerwünscht hoher Reibung abgetragen, und es kann dann zu einem Verklemmen des Verstellrings und infolgedessen des gesamten Leitschaufelverstellsystems kommen. Mögliche Ursachen für diesen Verschleiß sind Vibrationen, ein zu kleiner Berührungskontakt zwischen Verstellring und Verstellhebel, zu hohe Temperaturen im Betrieb etc.

Um diesem Problem zu begegnen, schlägt die EP 2 226 474 A2 einen Abgasturbolader vor, dessen Verstellring in einem mit den jeweiligen Verstellhebel in Kontakt stehenden Eingriffsbereichen verstärkt ist. Zum Beispiel werden die Eingriffsbereiche durch Stanzen hergestellt, und mittels eines axialen Stauchens, das nach dem Stanzen durchgeführt wird, wird dann eine erhabene Verstärkung auf der Oberseite und/oder auf der Unterseite des Verstellrings erzeugt. Dies ist jedoch zum einen besonders aufwändig herzustellen und zum anderen besonders materialintensiv. Es kommt zu einem besonders schweren Verstellring, welcher folglich eine unerwünscht hohe Massenträgheit aufweist.

Aufgabe der vorliegenden Erfindung ist es, einen besonders leichten und zuverlässigen Verstellring für eine Leitschaufelverstelleinheit bereitzustellen.

Diese Aufgabe wird durch die Gegenstände der unabhängigen Patentansprüche gelöst. Weitere mögliche Ausgestaltungen der Erfindung sind in den Unteransprüchen, der Beschreibung und den Figuren offenbart. Merkmale, Vorteile und mögliche Ausgestaltungen, die im Rahmen der Beschreibung für einen der Gegenstände der unabhängigen Ansprüche dargelegt sind, sind kategorie- und ausführungsformübergreifend zumindest analog als Merkmale, Vorteile und mögliche Ausgestaltungen des jeweiligen Gegenstands der anderen unabhängigen Ansprüche sowie jeder möglichen Kombination der Gegenstände der unabhängigen Ansprüche, gegebenenfalls in Verbindung mit einem oder mehr der Unteransprüche, anzusehen.

Gemäß der Erfindung werden ein Feinschneidwerkzeug und ein Verfahren - jeweils ausgebildet zum Herstellen eines Verstellrings, insbesondere für eine Leitschaufelverstelleinheit einer Turbine - vorgeschlagen. Bei der Turbine kann es sich um eine Turbine eines Abgasturboladers handeln. Mittels der Leitschaufelverstelleinheit ist eine Winkelstellung von Leitschaufeln der Turbine durch Drehen des Verstellrings verstellbar. Das Feinschneidwerkzeug wird zum Herstellen des Verstellrings im Verfahren eingesetzt. Durch den Verstellring, der mittels des Verfahrens bzw. mittels des Feinschneidwerkzeugs hergestellt ist, ist ein weiterer Gegenstand der vorliegenden Erfindung gebildet.

Der Verstellring weist Verstellhebelkulissen auf, die jeweils in einen Verstellringkörper des Verstellrings eindringen. Mit anderen Worten handelt es sich bei der jeweiligen Verstellhebelkulisse um einen materialfreien Bereich, beispielsweise eine Nut oder eine, eine axiale Dicke bzw. Stärke des Verstellringkörpers vollständig durchdringende Öffnung. Jedenfalls ist die jeweilige Verstellhebelkulisse zur Aufnahme eines jeweiligen Verstellhebels der Leitschaufelverstelleinheit eingerichtet. Des Weiteren weist der Verstellring je Verstellhebelkulisse ein einstückig mit dem Verstellringkörper ausgebildetes Verstärkungselement auf. Dieses ist entlang einer Kulissenkante der zugehörigen Verstellhebelkulisse angeordnet und springt von einer Axialscheibenfläche des Verstellringkörpers axial hervor. Das jeweilige Verstärkungselement kann sich entlang der gesamten Kulissenkante erstrecken, was bedeutet, dass je Kulissenkante genau ein Verstärkungselement angeordnet ist. Alternativ können je Kulissenkante zwei oder mehr Verstärkungselemente ausgebildet sein, die voneinander beabstandet sind.

Die Verstellhebelkulissen und die Verstärkungselemente sind gemeinsam mittels eines einzigen axialen Arbeitshubs gebildet. Das bedeutet, zum Bilden der Verstellhebelkulissen und der Verstärkungselemente, insbesondere mittels Trennens und/oder Umformens, wurde auf einen Materialrohling ein einziges Mal für eine einzige ununterbrochene Zeitdauer eine axiale Fertigungskraft ausgeübt. Vor dem Beginn des Ausübens der Fertigungskraft auf den Materialrohling waren weder die Verstellhebelkulissen noch die Verstärkungselemente gebildet, wohingegen beide nach Beendigung des Ausübens der axialen Fertigungskraft gebildet sind. Die Verstellhebelkulissen und die Verstärkungselemente sind also einstückig miteinander ausgebildet. Es hat sich herausgestellt, dass der Verstellring besonders leicht ist, wenn - wie hier - die Verstellhebelkulissen und die Verstärkungselemente gemeinsam mittels eines einzigen axialen Arbeitshubs gebildet sind. Infolgedessen hat der Verstellring ein vorteilhaft geringes Massenträgheitsmoment inne. Durch die Verstärkungselemente an den Verstellhebelkulissen ist eine Berührfläche, über welche der jeweilige Verstellhebel und die zugehörige Verstellhebelkulisse bei der Leitschaufelverstelleinheit miteinander in Berührung sind, besonders groß. So ergibt sich beim Verstellen der Leitschaufeln eine vorteilhaft geringe Flächenpressung zwischen dem jeweiligen Verstellhebel und der Verstellhebelkulisse, in welche er eingreift. Daraus resultiert weniger Reibung und folglich weniger Verschleiß und ein besonders zuverlässiger sowie besonders langlebiger Betrieb der Leitschaufelverstelleinheit bzw. der Turbine.

Im Verfahren zum Herstellen des Verstellrings, wobei die Verstellhebelkulissen und die Verstärkungselemente in einem einzigen axialen Arbeitshub gemeinsam gebildet werden, wird das Feinschneidwerkzeug eingesetzt. Das Feinschneidwerkzeug weist neben einem Feinschneidstempel einen Auswerfer, ein Stempelführungskörper, einen Innenformauswerfer, eine Außenformmatrize und einen Innenformstempel auf. Zum Herstellen des Verstellrings wird der Materialrohling, zum Beispiel ein Stahlblech, zwischen den Feinschneidstempel und den Auswerfer sowie zwischen den Stempelführungskörper und die Außenformmatrize sowie zwischen den Innenformauswerfer und den Innenformstempel eingelegt, insbesondere axial eingespannt.

Der Feinschneidstempel weist Innenformkavitäten zum Bilden der Verstellhebelkulissen auf und ist insbesondere ringförmig. Die jeweilige Innenformkavität ist dementsprechend derart ausgebildet, dass im Verfahren aus dem Materialrohling mittels der Innenformkavitäten die Verstellhebelkulissen ausgeschnitten werden. Entlang einer Innenformkavitätskante der jeweiligen Innenformkavität ist eine Verstärkungselementkavität gebildet, wobei die Verstärkungselementkavität sich vollständig entlang einer Gesamtlänge bzw. entlang der gesamten Innenformkavitätskante erstrecken kann. Dabei kann die jeweilige Verstärkungselementkavität ein- oder mehrfach unterbrochen oder ununterbrochen sein. Mittels der Verstärkungselementkavitäten des Feinschneidstempels werden im Verfahren aus dem Materialrohling die Verstärkungselemente des Verstellrings gebildet. Das bedeutet, die jeweilige Verstärkungselementkavität ist zum Bilden eines jeweiligen Verstärkungselements eingerichtet. Die jeweilige Verstärkungselementkavität ist an der jeweilig zugehörigen der Innenformkavitäten bzw. an deren Innenformkavitätskante derart angeordnet, dass die Verstärkungselementkavität in eine Innenformkavitätswand der Innenformkavität sowie in eine Axialstempelfläche des Feinschneidstempels eintaucht. Mit anderen Worten schließen die Innenformkavitätswand und die Axialstempelfläche im Bereich der Verstärkungselementkavität nicht über eine gemeinsame Kante miteinander ab, sondern über eine Stufe, die durch die Verstärkungselementkavität gebildet ist. Die jeweilige Verstärkungselementkavität weist also eine erste Verstärkungselementkavitätskante auf, über welche sie in die Axialstempelfläche eintaucht, und eine zweite Verstärkungselementkavitätskante, über welche sie in die Innenformkavitätswand eintaucht. Zwischen der ersten und der zweiten Verstärkungselementkavitätskante hat die jeweilige Verstärkungselementkavität insbesondere eine Innenkante, durch welche eine Innenkante der Stufe gebildet ist.

Der eine einzige axiale Arbeitshub des Verfahrens zum Herstellen der Verstellhebelkulissen und der Verstärkungselemente des Verstellrings ist also beispielsweise ein einziger und ununterbrochener Feinschneidhub. Mittels des einzigen axialen Arbeits- bzw. Feinschneidhubs wird das Material des Materialrohlings in die Verstärkungselementkavität hineingedrängt und dadurch zum Verstärkungselement umgeformt. Noch im selben Arbeitshub wird das Verstärkungselement bzw. das in die Verstärkungselementkavität hineingedrängte bzw. hineingezogene Material vom restlichen Materialrohling getrennt. Es ist zu verstehen, dass gleichzeitig mit dem Hineindrängen bzw. Hineinziehen des Materials in die Verstärkungselementkavität entlang derselben Innenformkavitätskante abseits der Verstärkungselementkavität ein Schneiden bzw. Trennen des Materials desselben Materialrohlings erfolgen kann. Auf diese Weise werden die Verstellhebelkulissen und die Verstärkungselemente besonders effizient mittels des einzigen axialen Arbeitshubs aus demselben monolithischen Materialrohling gebildet. Es ist zu verstehen, dass ein Bilden der Verstellhebelkulissen und ein nachfolgendes Bilden der Verstärkungselemente, zum Beispiel ein Auftragsschweißen, nicht stattfindet. Des Weiteren findet ein Herstellen der Verstellhebelkulissen und ein davon separates Herstellen der Verstärkungselemente als unterschiedliche Materialkörper und ein kraft-, form- und/oder stoffschlüssiges Verbinden der Verstellhebelkulissen mit den Verstärkungselementen ebenso nicht statt. So ist das Herstellen des Verstellrings besonders aufwandsarm. Des Weiteren ergibt sich ein besonders leichter bzw. masseeffizient ausgebildeter Verstellring, welcher die Verstärkungselemente integral aufweist, da er mit besonders geringem Materialeinsatz hergestellt werden kann.

In einer weiteren möglichen Ausgestaltung des Verfahrens ist vorgesehen, dass zum Bilden der Verstellhebelkulissen und der Verstärkungselemente sowohl ein spanendes als auch ein spanloses Verringern einer Dicke eines Verstellringkörpers des Verstellrings, insbesondere ein axiales Stauchen, ein Fräsen etc., unterbleibt. So ist dem Gedanken an eine besonders einfache bzw. aufwandsarme Herstellung des Verstellrings in besonderem Maße Rechnung getragen. Dadurch ist aber nicht ausgeschlossen, dass vor oder nach dem Bilden der Verstellhebelkulissen und der Verstärkungselemente - das heißt vor oder nach dem einen einzigen axialen Arbeitshub - ein spanendes und/oder ein spanloses Bearbeiten eingesetzt wird, um den Verstellring zu finalisieren. Alternativ oder zusätzlich kann der Verstellring oder der Materialrohling abseits der Verstellhebelkulissen und/oder der Verstärkungselemente spanend und/oder spanlos bearbeitet werden. Des Weiteren ist es denkbar, dass der Verstellring mittels des einen einzigen axialen Arbeitshubs aus dem Materialrohling final hergestellt wird.

Gemäß einer weiteren möglichen Ausgestaltung des Feinschneidwerkzeugs sind an der jeweiligen Innenformkavitätskante zwei oder mehr Verstärkungselementkavitäten ausgebildet. Diese liegen einander gegenüber und sind über eine lichte Breite der Innenformkavität voneinander beabstandet. Dadurch bietet die Verstellhebelkulisse des hergestellten Verstellrings für das Verstellen der Leitschaufeln in beide Richtungen bzw. an beiden Kulissenseiten/Kulissenwänden eine besonders großflächige Berührfläche für den entsprechenden Verstellhebel. Die jeweilige Verstärkungselementkavität erstreckt sich einer weiteren möglichen Ausführungsform des Feinschneidwerkzeugs zufolge entlang eines geraden Innenformkavitätskantenabschnitts der Innenformkavitätskante. Das bedeutet, die Innenformkavitätskante hat zumindest einen solchen geraden Innenformkavitätskantenabschnitt, entlang dessen die Verstärkungselementkavität ausgebildet bzw. angeordnet ist. Die Innenformkavitätskante kann durch den geraden Innenformkavitätskantenabschnitt vollständig gebildet sein. Die Verstärkungselementkavität kann länger oder kürzer als der gerade Innenformkavitätskantenabschnitt oder gleich lang wie der gerade Innenformkavitätskantenabschnitt sein. In Verbindung mit Ausführungsformen des Feinschneidwerkzeugs, bei denen an der jeweiligen Innenformkavitätskante zwei oder mehr gerade Verstärkungselementkavitäten ausgebildet sind, ist zu verstehen, dass die geraden Innenformkavitätskantenabschnitte derselben Innenformkavitätskante schräg zueinander angeordnet sein können. Alternativ sind die Innenformkavitätskantenabschnitte derselben Innenformkavitätskante zueinander parallel angeordnet. Bei letzterem sind beim hergestellten Verstellring die Verstärkungselemente einander gegenüberliegend und parallel zueinander angeordnet. Indem die Verstärkungselementkavitäten gerade ausgebildet sind, sind die entstehenden bzw. entstandenen Verstärkungselemente des Verstellrings besonders einfach herstellbar.

Eine weitere mögliche Ausgestaltung des Feinschneidwerkzeugs sieht vor, dass die erste Verstärkungselementkavitätskante der jeweiligen Verstärkungselementkavität, über welche sie in die Axialstempelfläche eintaucht, ganz oder abschnittsweise gezielt abgerundet ist. Die Verstärkungselementkavitätskante weist also einen wesentlichen Kantenradius auf, der beim Herstellen des Feinschneidstempels gezielt hergestellt worden ist. Der Kantenradius beträgt beispielsweise weniger als 1 Millimeter, insbesondere wenige Zehntelmillimeter (zum Beispiel 0,15 Millimeter), oder 1 Millimeter oder mehr. So kann im einzigen Feinschneidhub bzw. im Verfahren zum Herstellen des Verstellrings das Material des Materialrohlings besonders effizient in die Verstärkungselementkavität hineingedrängt bzw. hineingezogen werden. Dabei gleitet es besonders effizient über die abgerundete, das heißt den Kantenradius aufweisende Verstärkungselementkavitätskante. Aufgrund der abgerundeten Verstärkungselementkavitätskante ist im Verfahren verhindert, dass das Material des Materialrohlings unerwünscht über eine scharfe Kante in die Verstärkungselementkavität hineingezogen wird und dadurch zum Beispiel reißt. Im Umkehrschluss ist das Verstärkungselement am hergestellten Verstellring besonders stabil und darüber hinaus zuverlässig mit dem Verstellringkörper verbunden. Beim Feinschneidwerkzeug ist gemäß einer weiteren möglichen Ausgestaltung vorgesehen, dass die zweite Verstärkungselementkavitätskante der jeweiligen Verstärkungselementkavität, über welche sie in die Innenformkavitätswand eintaucht, ohne Kantenradius ausgebildet ist. Hierunter ist zu verstehen, dass an der zweiten Verstärkungselementkavitätskante gezielt kein Kantenradius herausgearbeitet wurde und/oder dass an der zweiten Verstärkungselementkavitätskante ein durch einen anderen Herstellungsschritt als Nebeneffekt entstandener Kantenradius gezielt entfernt wurde. So weist die Verstärkungselementkavität an dieser Stelle eine besonders scharfe Kante auf, sodass das Material des Materialrohlings besonders effizient im Feinschneidhub geschnitten werden kann. Es entstehen dabei besonders wenige Grate sowie eine besonders saubere Schnittkante am hergestellten Verstellring. Dadurch reduziert sich ein Aufwand zum Nachbearbeiten des mittels des einen einzigen Arbeitshubs hergestellten Verstellrings signifikant.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Die Zeichnung zeigt in

- Fig. 1: eine teilweise und perspektivische Ansicht eines beispielhaften Verstellrings für eine Leitschaufelverstelleinheit einer Turbine, zum Beispiel eines Abgasturboladers,
- Fig. 2: eine teilweise Ansicht eines beispielhaften Feinschneidstempels eines Feinschneidwerkzeugs zum Herstellen des Verstellrings,
- Fig. 3: eine teilweise Ansicht des beispielhaften Feinschneidwerkzeugs, wobei zwischen dessen Feinschneidstempel und einem dem Feinschneidstempel zugeordneten Auswerfer ein Materialrohling eingelegt ist,
- Fig. 4: eine teilweise und geschnittene Ansicht des Feinschneidwerkzeugs aus Fig. 3 und in
- Fig. 5: eine teilweise und geschnittene Ansicht des beispielhaften Feinschneidwerkzeugs, wobei aus dem Materialrohling durch einen Feinschneidhub der Verstellring gewonnen wird.

Im Folgenden werden beispielhaft ein Verstellring 1 sowie ein Feinschneidwerkzeug 18 und ein Verfahren zum Herstellen des Verstellrings 1 in gemeinsamer Beschreibung erläutert. Dabei sind gleiche oder funktionsgleiche Elemente in den Figuren mit gleichem Bezugszeichen versehen. Es wird auf ein Koordinatensystem bezuggenommen, das für den Verstellring 1 und für das Feinschneidwerkzeug 18 gilt.

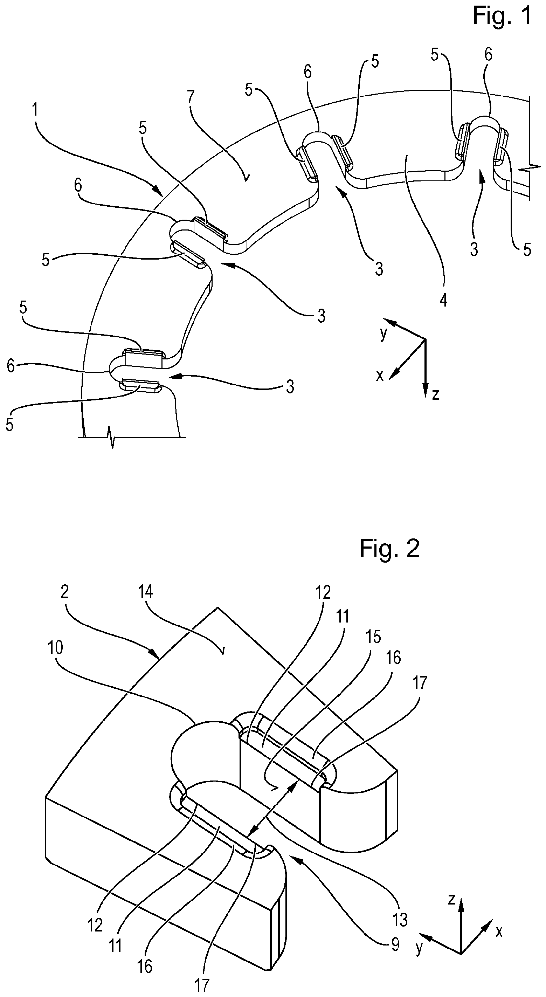

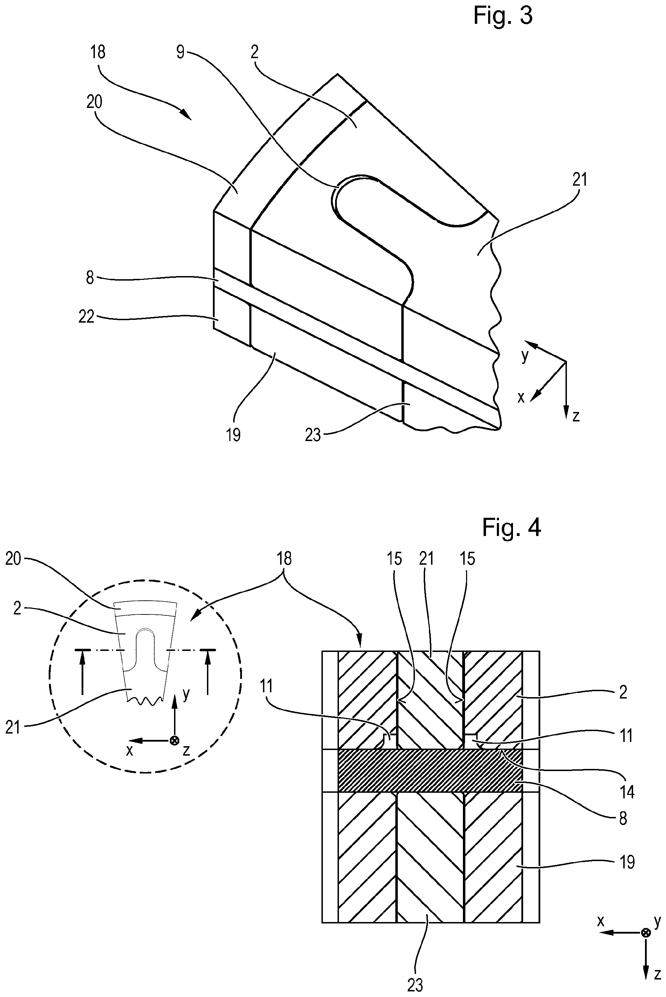

Fig. 1 zeigt den Verstellring 1 teilweise und in perspektivischer Ansicht, dessen Herstellungsverfahren weiter unten noch erläutert wird. Durch den Verstellring 1 ist bei der beispielhaften Ausführung ein Bauteil für eine Leitschaufelverstelleinheit für eine Turbine gebildet, insbesondere für einen Abgasturbolader eines Kraftfahrzeugs bzw. einer Verbrennungskraftmaschine. Leitschaufeln der Turbine sind mittels der Leitschaufelverstelleinheit durch Drehen des Verstellrings 1 über Verstellhebel, die mit einem Betätigungsabschnitt mit dem Verstellring 1 gekoppelt sind, verstellbar. Der Verstellring 1 weist Verstellhebelkulissen 3 auf, die jeweils in einen Verstellringkörper 4 des Verstellrings 1 eindringen. Hier im Beispiel ist die jeweilige Verstellhebelkulisse 3 als eine jeweilige Öffnung ausgebildet, die den Verstellringkörper 4 axial, das heißt entlang der Z-Achse, vollständig durchdringt. Die jeweilige Verstellhebelkulisse 3 ist zur Aufnahme des jeweiligen Betätigungsabschnitts (der auch als Pin ausgeführt sein kann) der Verstellhebel eingerichtet. Weiter weist der Verstellring 1 je Verstellhebelkulisse 3 ein einstückig mit dem Verstellringkörper 4 ausgebildetes Verstärkungselement 5 oder - wie hier im Beispiel in Fig. 1 dargestellt - zwei oder mehr solcher Verstärkungselemente 5 auf. Das jeweilige Verstärkungselement 5 ist entlang einer jeweiligen Kulissenkante 6 der zugehörigen Verstellhebelkulisse 3 angeordnet und springt von einer Axialscheibenfläche 7 des Verstellringkörpers 4 axial, das heißt entlang der Z-Richtung, hervor. Die Verstellhebelkulissen 3 und die Verstärkungselemente 5 sind gemeinsam mittels eines einzigen axialen Arbeitshubs gebildet, also einstückig miteinander ausgebildet, das heißt aus einem einzigen monolithischen Materialrohling 8 (siehe Fig. 3 und Fig. 4) herausgearbeitet.

Fig. 2 zeigt einen Feinschneidstempel 2 des Feinschneidwerkzeugs 18 in teilweiser Ansicht, der im Verfahren zum Herstellen des Verstellrings 1 eingesetzt wird. Man erkennt, dass der Feinschneidstempel 2 ringförmig ist und Innenformkavitäten 9 zum Bilden der Verstellhebelkulissen 3 aufweist. Die jeweilige Innenformkavität 9 ist derart ausgebildet, dass im Verfahren aus dem Materialrohling 8, bei welchem es sich insbesondere um ein Stahlblech handelt, mittels der Innenformkavitäten 9 die Verstellhebelkulissen 3 ausgeschnitten werden. Entlang einer Innenformkavitätskante 10 der jeweiligen Innenformkavität 9 ist eine Verstärkungselementkavität 11 oder sind zwei oder mehr Verstärkungselementkavitäten 11 angeordnet. Vorliegend sind je Innenformkavität 9 zwei Verstärkungselementkavitäten 11 ausgebildet, die sich jeweils entlang eines jeweiligen geraden Innenformkavitätskantenabschnitts 12 der Innenformkavitätskante 10 erstrecken. Gemäß dem vorliegenden Beispiel liegen die Verstärkungselementkavitäten 11 einander gegenüber und sind über eine lichte Breite 13 der Innenformkavität 9 voneinander beabstandet. Mittels der jeweiligen Verstärkungselementkavität 11 des Feinschneidstempels 2 bzw. der Innenformkavitäten 9 werden im Verfahren aus dem Materialrohling 8 die Verstärkungselemente 5 gebildet. Anders ausgedrückt: Die Verstärkungselementkavitäten 11 sind jeweils zum Bilden eines jeweiligen Verstärkungselements 5 des Verstellrings 1 eingerichtet.

Es ist in Fig. 2 zudem gut zu erkennen, dass die Verstärkungselementkavitäten 11 jeweils zum einen in eine Axialstempelfläche 14 des Feinschneidstempels 2 und zum anderen in eine Innenformkavitätswand 15 der Innenformkavität 9 eintauchen. Über eine erste Verstärkungselementkavitätskante 16 taucht die jeweilige Verstärkungselementkavität 11 in die Axialstempelfläche 14 ein, und über eine zweite Verstärkungselementkavitätskante 17 taucht dieselbe Verstärkungselementkavität 11 in die Innenformkavitätswand 15 ein, sodass die jeweilige Verstärkungselementkavität 11 sich als Stufe zwischen der Axialstempelfläche 14 und der Innenformkavitätswand 15 darstellt. Bei der beispielhaften Ausführung ist die erste Verstärkungselementkavitätskante 16 gezielt abgerundet, sodass sie einen wesentlichen Kantenradius aufweist. Dahingegen ist vorliegend die zweite Verstärkungselementkavitätskante 17 ohne Kantenradius ausgebildet. Mit anderen Worten: An der zweiten Verstärkungselementkavitätskante 17 ist gezielt kein Kantenradius herausgearbeitet worden und/oder ein durch einen anderen Herstellungsschritt als Nebeneffekt entstandener Kantenradius ist gezielt entfernt worden.

Fig. 3 zeigt eine teilweise Ansicht des Feinschneidwerkzeugs 18, das den Feinschneidstempel 2 als Hauptstempel aufweist. Es sind weitere Elemente des Feinschneidwerkzeugs 18 in teilweiser Ansicht gezeigt, nämlich ein Auswerfer 19, ein Stempelführungskörper 20, ein Innenformauswerfer 21, eine Außenformmatrize 22 und ein Innenformstempel 23. Zum Herstellen des Verstellrings 1 wird der Materialrohling 8 zwischen den Feinschneidstempel 2 und den Auswerfer 19 sowie zwischen den Stempelführungskörper 20 und die Außenformmatrize 22 sowie zwischen den Innenformauswerfer 21 und den Innenformstempel 23 eingelegt, insbesondere axial bzw. entlang der Z-Richtung eingespannt.

Im Verfahren zum Herstellen des Verstellrings 1, werden die Verstellhebelkulissen 3 und die Verstärkungselemente 5 in einem einzigen axialen Arbeitshub gemeinsam gebildet, indem auf den Materialrohling 8 ein einziges Mal für eine einzige ununterbrochene Zeitdauer eine axiale Fertigungskraft 24 ausgeübt wird. Der einzige Arbeitshub ist ein Feinschneidhub und wird in Z-Richtung ausgeführt. Zunächst zeigt Fig. 4 eine teilweise und geschnittene Ansicht des Feinschneidwerkzeugs 18, bevor der Feinschneidhub ausgeführt wird. Es ist zu erkennen, dass weder die Verstellhebelkulissen 3 noch die Verstärkungselemente 5 gebildet sind. In der Schnittdarstellung ist weiter gut zu erkennen, dass die Verstärkungselementkavitäten 11 zunächst leer sind.

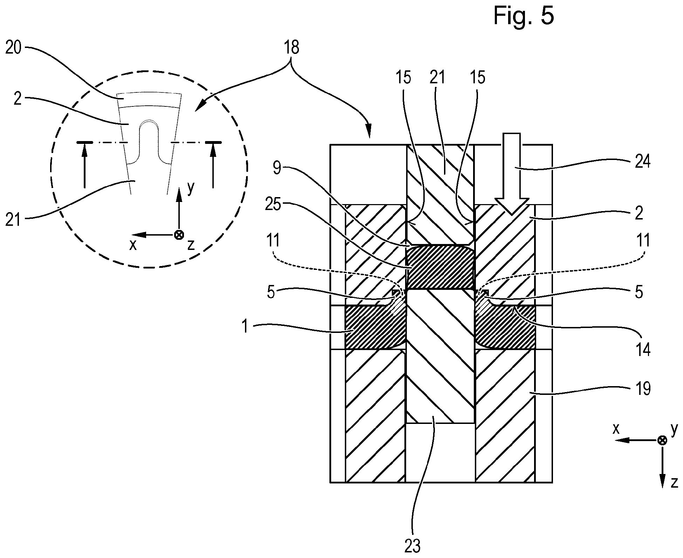

Fig. 5 zeigt eine teilweise und geschnittene Ansicht des Feinschneidwerkzeugs 18, wobei aus dem Materialrohling 8 durch den einzigen Feinschneidhub der Verstellring 1 gewonnen wird/wurde. Es ist zu erkennen, dass mittels des einzigen axialen Arbeitshubs bzw. Feinschneidhubs das Material des Materialrohlings 8 in die Verstärkungselementkavitäten 11 hineingedrängt und dadurch zu den Verstärkungselementen 5 umgeformt wird/wurde. Gleichzeitig mit dem Hineindrängen bzw. Hineinziehen des Materials in die Verstärkungselementkavitäten 11 erfolgt entlang derselben Innenformkavitätskante 10 abseits der Verstärkungselementkavitäten 11 ein Schneiden bzw. Trennen des Materials desselben Materialrohlings 8. Immer noch im selben Arbeits- bzw. Feinschneidhub werden die Verstärkungselemente 5 bzw. das in die Verstärkungselementkavitäten 11 hineingedrängte bzw. hineingezogene Material vom restlichen Materialrohling 25 getrennt. Im einzigen Arbeits- bzw. Feinschneidhub wird also das Material des Materialrohlings 8 umgeformt und getrennt, um den Verstellring herzustellen. Es ist in Fig. 5 zu erkennen, dass nach Beendigung des Ausübens der axialen Fertigungskraft 24 sowohl die Verstellhebelkulissen 3 als auch die Verstärkungselemente 5 gebildet sind.

Ein Herstellen der Verstellhebelkulissen 3 und ein davon separates Herstellen der Verstärkungselemente 5 als unterschiedliche Materialkörper und ein kraft-, form- und/oder stoffschlüssiges Verbinden des Verstellringkörpers 4 mit den Verstärkungselementen 5 findet nicht statt. Ebenso wenig werden die Verstärkungselemente 5 in einem zeitlich nach Beendigung einer Herstellung der Verstellhebelkulissen 3 an den Verstellringkörper 4 angebracht, etwa mittels Auftragsschweißens oder dergleichen. Es ist vorliegend zudem vorgesehen, dass zum Bilden der Verstellhebelkulissen 3 und der Verstärkungselemente 5 kein spanendes und auch kein spanloses Verringern einer Dicke des Verstellringkörpers 4 erfolgt; insbesondere wird gezielt auf ein Stauchen, Fräsen etc. des Verstellrings 1 verzichtet. Vor dem Bilden der Verstellhebelkulissen 3 und der Verstärkungselemente 5 - das heißt vor dem einen einzigen axialen Arbeitshub - kann der Materialrohling 8 spanend und/oder spanlos bearbeitet werden. Alternativ oder zusätzlich kann nach dem Bilden der Verstellhebelkulissen 3 und der Verstärkungselemente 5 - das heißt nach dem einen einzigen axialen Arbeitshub - der Verstellring 1 spanend und/oder spanlos bearbeitet werden, zum Beispiel um den Verstellring 1 zu finalisieren.

Durch das Feinschneidwerkzeug 18, durch das Verfahren zum Herstellen des Verstellrings 1 sowie durch den Verstellring 1 selbst ist eine jeweilige Möglichkeit aufgezeigt, wie die eingangs erläuterte Aufgabe, einen besonders leichten und zuverlässigen Verstellring für eine Leitschaufelverstelleinheit bereitzustellen, gelöst wird.

### Bezugszeichenliste

- 1: Verstellring
- 2: Feinschneidstempel
- 3: Verstellhebelkulisse
- 4: Verstellringkörper
- 5: Verstärkungselement
- 6: Kulissenkante
- 7: Axialscheibenfläche
- 8: Materialrohling
- 9: Innenformkavität
- 10: Innenformkavitätskante
- 11: Verstärkungselementkavität
- 12: Innenformkavitätskantenabschnitt
- 13: lichte Breite
- 14: Axialstempelfläche
- 15: Innenformkavitätswand
- 16: erste Verstärkungselementkavitätskante
- 17: zweite Verstärkungselementkavitätskante
- 18: Feinschneidwerkzeug
- 19: Auswerfer
- 20: Stempelführungskörper
- 21: Innenformauswerfer
- 22: Außenformmatrize
- 23: Innenformstempel
- 24: Fertigungskraft
- 25: restlicher Materialrohling

## Patentansprüche

1. Feinschneidwerkzeug (18) zum Herstellen eines Verstellrings (1), insbesondere für eine Leitschaufelverstelleinheit einer Turbine, wobei das Feinschneidwerkzeug (18) aufweist:
- einen Auswerfer (19),
- einen Stempelführungskörper (20),
- einen Innenformauswerfer (21),
- eine Außenformmatrize (22),
- einen Innenformstempel (23),
- einen Feinschneidstempel (2) mit Innenformkavitäten (9), welche jeweils zum Bilden einer jeweiligen Verstellhebelkulisse (3) des Verstellrings (1) ausgebildet sind, wobei entlang einer Innenformkavitätskante (10) der jeweiligen Innenformkavität (9) eine Verstärkungselementkavität (11) zum Bilden eines Verstärkungselements (5) des Verstellrings (1) gebildet ist, welche in eine Innenformkavitätswand (15) der Innenformkavität (9) sowie in eine Axialstempelfläche (14) des Feinschneidstempels (2) eintaucht.

2. Feinschneidwerkzeug (18) nach Anspruch 1, **dadurch gekennzeichnet, dass** an der jeweiligen Innenformkavitätskante (10) zwei oder mehr Verstärkungselementkavitäten (11) ausgebildet sind, die einander gegenüberliegen und über eine lichte Breite (13) der Innenformkavität (9) voneinander beabstandet sind.

3. Feinschneidwerkzeug (18) nach Anspruch 1 oder 2, **dadurch gekennzeichnet, dass** die jeweilige Verstärkungselementkavität (11) sich entlang eines geraden Innenformkavitätskantenabschnitts (12) der Innenformkavitätskante (10) erstreckt.

4. Feinschneidwerkzeug (18) nach einem der vorhergehenden Ansprüche, **dadurch gekennzeichnet, dass** eine Verstärkungselementkavitätskante (16) der jeweiligen Verstärkungselementkavität (11), über welche sie in die Axialstempelfläche (14) eintaucht, abgerundet ist.

5. Feinschneidwerkzeug (18) nach einem der vorhergehenden Ansprüche, **dadurch gekennzeichnet, dass** eine Verstärkungselementkavitätskante (17) der jeweiligen Verstärkungselementkavität (11), über welche sie in die Innenformkavitätswand (15) eintaucht, ohne Radius ausgebildet ist.

6. Verfahren zum Herstellen eines Verstellrings (1), insbesondere für eine Leitschaufelverstelleinheit einer Turbine, wobei mittels eines nach einem der vorhergehenden Ansprüche ausgebildeten Feinschneidwerkzeugs (18) Verstellhebelkulissen (3) des Verstellrings (1) und Verstärkungselemente (5) des Verstellrings (1) in einem einzigen axialen Arbeitshub gemeinsam gebildet werden, in welchem ein Material eines Materialrohlings (8) in die Verstärkungselementkavität (11) hineingedrängt und dadurch zum Verstärkungselement (3) umgeformt wird, bevor es im selben Arbeitshub vom restlichen Materialrohling (25) getrennt wird.

7. Verfahren nach Anspruch 6, **dadurch gekennzeichnet, dass** zum Bilden der Verstellhebelkulissen (3) und der Verstärkungselemente (5) sowohl ein spanendes als auch ein spanloses Verringern einer Dicke eines Verstellringkörpers (4) des Verstellrings (1) unterbleibt.

8. Verstellring (1) für eine Leitschaufelverstelleinheit einer Turbine, aufweisend:
- Verstellhebelkulissen (3), die in einen Verstellringkörper (4) des Verstellrings (1) eindringen und zur Aufnahme eines jeweiligen Verstellhebels der Leitschaufelverstelleinheit eingerichtet sind,
- je Verstellhebelkulisse (3) ein einstückig mit dem Verstellringkörper (4) ausgebildetes Verstärkungselement (5), das entlang einer Kulissenkante (6) der zugehörigen Verstellhebelkulisse (3) angeordnet ist und von einer Axialscheibenfläche (7) des Verstellringkörpers (4) axial hervorspringt,
wobei die Verstellhebelkulissen (3) und die Verstärkungselemente (5) gemeinsam mittels eines einzigen axialen Arbeitshubs gebildet sind.

9. Verstellring nach Anspruch 8, **dadurch gekennzeichnet, dass** dieser durch ein Verfahren gemäß wenigstens einem der Ansprüche 6 oder 7 hergestellt ist.
